# EUROPÄISCHE PATENTANMELDUNG

(11) **EP 4 760 557 A1**
(43) Veröffentlichungstag der Anmeldung: **17.06.2026**
(21) Anmeldenummer: 25222216.1
(22) Anmeldetag: 10.12.2025
(51) Int. Cl.: G06F 21/43, G06F 21/44, H04L 9/40

(54) **VORRICHTUNG UND VERFAHREN ZUR ERFASSUNG EINES MOBILEN GERÄTS IN EINEM NAHBEREICH**

(30) Priorität: 10.12.2024 DE 102024136933
(71) Anmelder: Pilz GmbH & Co. KG, 73760 Ostfildern (DE)
(72) Erfinder: Schuster, Peter, 73760 Ostfildern (DE); Kramer, Christian, 73760 Ostfildern (DE); Wolfram, Thomas, 73760 Ostfildern (DE); Kurz, Oliver, 73760 Ostfildern (DE)
(74) Vertreter: Witte, Weller & Partner Patentanwälte mbB

(57) **Zusammenfassung**

Vorrichtung (10) zur Erfassung eines mobilen Geräts (16) in einem Nahbereich der Vorrichtung. Die Vorrichtung (10) ist dazu eingerichtet, von dem mobilen Gerät (16) über eine unverschlüsselte Funkverbindung (20) einen Datensatz mit einer Schlüsselinformation zu empfangen, die Schlüsselinformation in einem Speicherbereich für Datensätze über bereits durchgeführte Koppelvorgänge für die Funkverbindung zu speichern, um die unverschlüsselte Funkverbindung (20) in eine verschlüsselte Funkverbindung (22) zu wandeln, nach der Umwandlung der Funkverbindung auf einen auf einer weiteren Funktechnologie basierenden Dienst des mobilen Geräts zuzugreifen, sowie mittels des auf der weiteren Funktechnologie basierenden Dienstes eine Erfassung des mobilen Geräts (16) in dem Nahbereich der Vorrichtung durchzuführen.

## Beschreibung

Die vorliegende Erfindung betrifft eine Vorrichtung und ein Verfahren zur Erfassung und Lokalisierung eines mobilen Geräts im Nahbereich der Vorrichtung, insbesondere in sicherheitskritischen oder automatisierten Umgebungen.

In der Automatisierungstechnik sind Verfahren und Vorrichtungen zur Nahbereichserfassung von mobilen Geräten grundsätzlich bekannt. Insbesondere in sicherheitskritischen Bereichen, wie der Mensch-Roboter-Kollaboration oder Anwendungen, bei denen Personen in gefährlichen Umgebungen arbeiten müssen, beispielsweise bei der Inbetriebnahme oder Wartung technischer Anlagen, ist die präzise Lokalisierung von mobilen Geräten und Personen von entscheidender Bedeutung.

Die Veröffentlichung EP 3 910 231 A1 beschreibt beispielsweise ein Sicherheitssystem, das durch Funkortung und Identifizierungssensoren die Position und Identität von Personen oder Objekten erfasst, um Gefahren in sicherheitskritischen Bereichen zu minimieren.

In DE 10 2022 124 254 A1 wird ein Verfahren zur sicheren Bedienung von Feldgeräten mittels mobiler Endgeräte beschrieben. Hierbei wird eine Kombination aus Bluetooth- und Ultra-Wideband-(UWB)-Technologie eingesetzt, um die Entfernung zwischen einem mobilen Endgerät und dem Feldgerät zu bestimmen. Je nach Distanz erfolgt die Authentifizierung entweder durch Benutzereingaben oder automatisch über UWB-Verbindungen, was den Bedienkomfort erhöht, ohne die Sicherheit zu beeinträchtigen.

US 2023 / 319 907 A1 beschreibt ein Verfahren und eine Vorrichtung zum vereinfachten Koppeln eines mobilen Geräts mit zwei getrennten drahtlosen Kommunikationsvorrichtungen, wie sie insbesondere in Fahrzeugen für Zugangssysteme und Infotainment genutzt werden. Nach einer ersten sicheren Koppelung zwischen dem mobilen Gerät und einer ersten Kommunikationsvorrichtung wird der dabei aufgebaute Kommunikationskanal verwendet, um eine Out-of-Band-Koppelung einer zweiten Kommunikationsvorrichtung automatisiert und ohne zusätzlichen Benutzeraufwand durchzuführen.

In der Nahbereichserfassung gewinnt die UWB-Technologie zunehmend an Bedeutung, da sie eine exakte Echtzeit-Positionsbestimmung ermöglicht. Diese Fähigkeit ist insbesondere für die Betriebssicherheit und Prozessoptimierung in industriellen Anwendungen unverzichtbar. Moderne mobile Endgeräte wie Smartphones und Tablets integrieren bereits UWB-Funktionen, um diese Technologie zu nutzen. Hersteller wie Apple setzen jedoch bewusst Einschränkungen bei der Nutzung von Lokalisierungsdiensten, um Missbrauch durch unautorisiertes Tracking zu verhindern und so die Privatsphäre zu schützen.

Eine Herausforderung in der Automatisierungstechnik liegt darin, dass aufgrund solcher Einschränkungen viele bestehende Systeme eine manuelle Benutzerinteraktion erfordern, um eine sichere 1:1-Verbindung zwischen Geräten herzustellen, bevor Lokalisierungsdienste genutzt werden können. Dieser Prozess, der in der Regel auf Bluetooth Low Energy (BLE)-Verbindungen basiert, erfordert den Austausch kryptografischer Schlüssel, um eine verschlüsselte Kommunikation zu gewährleisten. Für viele industrielle Anwendungen ist diese manuelle Interaktion jedoch ineffizient, weshalb ein Bedarf an Lösungen besteht, die es Geräten ermöglichen, automatisch und ohne direkte Benutzerinteraktion auf Lokalisierungsdienste zuzugreifen.

Zudem kann nicht vorausgesetzt werden, dass Vorrichtungen der Automatisierungstechnik, die für die Nahbereichserfassung genutzt werden, miteinander vernetzt sind, um Informationen auszutauschen. Dies gilt insbesondere dann, wenn die Geräte zwar vom selben Hersteller stammen, aber an unterschiedliche Endnutzer vertrieben werden. Das bedeutet, dass die Sicherheit und das daraus resultierende Vertrauensverhältnis, das zwischen einer Vorrichtung und einem mobilen Gerät besteht, nicht ohne Weiteres auf eine andere Vorrichtung übertragen werden können. Eine andere Vorrichtung wird daher nicht automatisch ebenfalls als vertrauenswürdig eingestuft.

Vor diesem Hintergrund ist es eine Aufgabe der vorliegenden Erfindung, eine Vorrichtung und ein Verfahren zur Erfassung und Lokalisierung eines mobilen Geräts im Nahbereich bereitzustellen, die die genannten Probleme überwinden und eine einfachere sowie effizientere Nutzung von Lokalisierungsdiensten im industriellen Umfeld ermöglichen.

Gemäß einem Aspekt wird diese Aufgabe durch eine Vorrichtung zur Erfassung eines mobilen Geräts in einem Nahbereich der Vorrichtung gelöst, wobei die Vorrichtung eine Steuereinheit aufweist, die dazu eingerichtet ist, von dem mobilen Gerät über eine unverschlüsselte Funkverbindung einen Datensatz mit einer Schlüsselinformation zu empfangen, die Schlüsselinformation in einem Speicherbereich für Datensätze über bereits durchgeführte Koppelvorgänge für die Funkverbindung zu speichern, um die unverschlüsselte Funkverbindung in eine verschlüsselte Funkverbindung zu wandeln, nach der Umwandlung der Funkverbindung auf einen auf einer weiteren Funktechnologie basierenden Dienst des mobilen Geräts zuzugreifen, sowie mittels des auf der weiteren Funktechnologie basierenden Dienstes eine Erfassung des mobilen Geräts in dem Nahbereich der Vorrichtung durchzuführen.

Gemäß einem weiteren Aspekt wird diese Aufgabe durch ein Verfahren zur Erfassung eines mobilen Geräts in einem Nahbereich einer Vorrichtung gelöst, aufweisend:
- Empfang eines Datensatzes mit einer Schlüsselinformation von dem mobilen Gerät über eine unverschlüsselte Funkverbindung;
- Speichern von Schlüsselinformationen in einem Speicherbereich für Datensätze über bereits durchgeführte Kopplungsvorgänge für die Funkverbindung;
- Umwandeln der unverschlüsselten Funkverbindung in eine verschlüsselte Funkverbindung mithilfe der im Speicherbereich abgelegten Schlüsselinformation;
- Zugreifen auf einen Dienst des mobilen Geräts, der auf einer anderen Funktechnologie basiert, nach Umwandlung der Funkverbindung; sowie
- Erfassen des mobilen Geräts in dem Nahbereich der Vorrichtung mithilfe des auf einer anderen Funktechnologie basierenden Dienstes.

Es ist somit eine Idee der vorliegenden Erfindung, eine effizientere und benutzerfreundlichere Lösung zur Erfassung und Lokalisierung mobiler Geräte in einem Nahbereich einer Vorrichtung durch die Vorrichtung bereitzustellen. Insbesondere wird ein Ein-zu-Viele-Bonding angestrebt, um die Notwendigkeit manueller Benutzerinteraktionen zu minimieren.

Der Kern der Erfindung liegt in der automatisierten Herstellung einer sicheren, das heißt verschlüsselten, Funkverbindung zwischen einer Vorrichtung und einem mobilen Gerät, ohne dass dafür eine Benutzerinteraktion erforderlich ist oder die Vorrichtung Informationen über das mobile Gerät, beispielsweise von einem zentralen Server oder einer anderen Vorrichtung, beziehen muss. Zu diesem Zweck sendet das mobile Gerät nach oder während einer Erkennungs- und Verbindungsphase über eine unverschlüsselte Verbindung eine Schlüsselinformation an die Vorrichtung. Die Vorrichtung verwendet diese Schlüsselinformation, um die bestehende unverschlüsselte Verbindung in eine verschlüsselte Verbindung umzuwandeln. Dazu wird die Schlüsselinformation in einem Speicherbereich für bereits durchgeführte Koppelvorgänge hinterlegt, sodass sowohl die Vorrichtung als auch das mobile Gerät davon ausgehen, dass eine Kopplung schon erfolgt ist.

Nach der Umwandlung der Verbindung kann die Vorrichtung auf den Lokalisierungsdienst des mobilen Geräts zugreifen und diesen nutzen, um das mobile Gerät im Nahbereich zu erfassen und zu lokalisieren, ohne dass hierfür eine Benutzerinteraktion erforderlich wird. Basierend auf dieser Lokalisierung kann die Vorrichtung eine Steuerfunktion auslösen, indem sie beispielsweise ein Signal sendet, das eine technische Anlage in einen sicheren Zustand versetzt.

Diese Lösung ermöglicht es, dass mobile Geräte mit Schlüsselinformationen ausgestattet werden, die sie der Vorrichtung zur Verfügung stellen, sodass die Vorrichtung das Ergebnis eines Kopplungsvorgangs zwischen dem mobilen Gerät und der Vorrichtung nachbilden kann. Das heißt, mobile Geräte können Schlüsselinformationen an die Vorrichtung übermitteln, wodurch die Vorrichtung das Ergebnis eines Kopplungsvorgangs reproduzieren kann, ohne dass zuvor ein expliziter Koppelvorgang zwischen den Geräten stattgefunden hat. Stattdessen werden die mobilen Geräte mit entsprechenden Schlüsselinformationen für die Vorrichtung ausgestattet, die sie an diese übertragen können, um eine Kopplung nachzustellen. Hierfür kann beispielsweise eine Applikation (App) auf dem mobilen Gerät vorgesehen sein, die die Schlüsselinformation entgegennimmt, speichert und bei einem Verbindungsaufbau an die Vorrichtung übermittelt.

Die vorliegende Lösung ermöglicht es der Vorrichtung, mobile Geräte im Nahbereich mithilfe von Funktionen zu lokalisieren, die direkt von den mobilen Geräten bereitgestellt werden. Hierfür ist weder eine Benutzerinteraktion erforderlich, noch müssen Informationen von einer anderen Quelle als dem mobilen Gerät selbst bezogen werden. Dadurch können die Lokalisierungsdienste zahlreicher mobiler Geräte auf einfache und effektive Weise für die Automatisierungstechnik nutzbar gemacht werden. Insbesondere ermöglicht dies eine kostengünstige und unkomplizierte Steuerung technischer Anlagen, die auf der Lokalisierung mobiler Geräte in ihrer Umgebung basiert, da bestehende Einrichtungen und Kommunikationsmittel optimal genutzt werden. Die eingangs gestellte Aufgabe ist damit vollständig gelöst.

In einer weiteren Ausgestaltung ist der Datensatz mit der Schlüsselinformation verschlüsselt.

Gemäß dieser Ausgestaltung kann eine sichere Übertragung der Schlüsselinformation über die unverschlüsselte Funkverbindung gewährleistet werden. Ebenso kann verhindert werden, dass Unbefugte die Schlüsselinformation auf dem mobilen Gerät auslesen können. Die Ausgestaltung trägt somit zu einer effektiven Umsetzung der automatisierten sicheren Verbindung bei.

In einer weiteren Ausgestaltung ist die Steuereinheit dazu eingerichtet, den Datensatz mit einem in der Vorrichtung hinterlegten Schlüssel zu entschlüsseln.

Gemäß dieser Ausgestaltung ist also in der Vorrichtung ein vordefinierter Schlüssel hinterlegt, der zur Entschlüsselung der übertragenen Schlüsselinformation verwendet wird. Dieser Schlüssel kann vorteilhafterweise auf einer Vielzahl von Vorrichtungen hinterlegt sein. Alle Geräte, die über den Schlüssel verfügen, können somit sicher die automatisierte sichere Verbindung aufbauen. Ein Ein-zu-Viele-Bonding (engl. One-tomany-Bonding) kann mit dieser Konfiguration besonders effizient und sicher realisiert werden.

In einer weiteren Ausgestaltung ist die Funkverbindung eine Bluetooth-Verbindung, insbesondere eine Bluetooth-Low-Energy-(BLE)-Verbindung.

Bluetooth ist eine weitverbreitete und bewährte Technologie, die in vielen mobilen Geräten standardmäßig integriert ist. Die Verwendung einer Bluetooth-Verbindung, insbesondere einer Bluetooth-Low-Energy (BLE)-Verbindung, ist im vorliegenden Fall vorteilhaft, da häufig Dienste eines mobilen Gerätes direkt oder indirekt auf die Authentifizierungsmechanismen der Bluetooth-Technologie zurückgreifen. Gängige Bluetooth-Implementierungen (auch Bluetooth-Stack genannt) bieten eine strukturierte Programmierschnittstelle (API), die einen einfachen programmatischen Zugriff auf die internen Bluetooth-Funktionen ermöglicht. Somit kann ohne großen Aufwand auf die relevanten Bluetooth-Funktionen zugegriffen werden, um die beschriebenen Kopplungsvorgänge sowie den Wechsel von unverschlüsselten zu verschlüsselten Verbindungen zu steuern. Diese Ausgestaltung trägt somit weiter zu einer einfachen und effizienten Realisierung bei.

In einer weiteren Ausgestaltung ist die weitere Funktechnologie eine Ultra-Breitband-(UWB)-Technologie, insbesondere eine UWB-basierte Abstands- und/oder Positionsbestimmung.

UWB ermöglicht es, den Abstand zwischen zwei Geräten auf wenige Zentimeter genau zu bestimmen, was in sicherheitskritischen Umgebungen wie der Automatisierungstechnik oder der Mensch-Roboter-Kollaboration von entscheidender Bedeutung ist. Risiken, die durch eine ungenaue Positionsbestimmung entstehen, können so minimiert werden. UWB arbeitet in Echtzeit und ermöglicht eine schnelle und zuverlässige Reaktion, was für Anwendungen, bei denen es auf genaue Zeit- und Abstandsberechnungen ankommt, unerlässlich ist. Die Kombination von UWB und BLE bietet weitere Vorteile, da die Stärken beider Technologien kombiniert werden können, um sowohl eine effiziente Kommunikation und Authentifizierung als auch eine präzise Lokalisierung zu gewährleisten. Insbesondere die vorgeschlagene automatische Kopplung, d. h. dass die Geräteverbindung und die Lokalisierung für den Benutzer im Hintergrund ablaufen, kann die Notwendigkeit eines Benutzereingriffs eliminieren, wodurch die UWB-Technologie effizient in der Automatisierungstechnik eingesetzt werden kann.

In einer weiteren Ausgestaltung ist ein Zugriff auf den auf der weiteren Funktechnologie basierenden Dienst nur möglich, wenn die Vorrichtung und das mobile Gerät über die verschlüsselte Funkverbindung verbunden sind.

Diese Ausgestaltung bietet den Vorteil, dass auf bereits bestehende Implementierungen von Bluetooth Low Energy (BLE) und Ultra-Wideband (UWB) zurückgegriffen werden können, die in modernen mobilen Geräten weitverbreitet sind. Dies erleichtert die Integration der beschriebenen Technologie in bestehende industrielle und sicherheitskritische Systeme erheblich. Viele mobile Geräte, wie Smartphones oder andere Endgeräte, sind standardmäßig mit BLE- und UWB-Technologie ausgestattet. Diese Technologien wurden von den Geräteherstellern bewusst so gestaltet, dass Missbrauch, beispielsweise durch unbefugtes Tracking oder Manipulation, vermieden wird. Hierfür wurden strenge Nutzungsregeln für Funkverbindungen und Authentifizierungsmechanismen eingeführt, die den Schutz der Privatsphäre sicherstellen. Durch die vorgeschlagene automatische Kopplung der Geräte müssen diese Schutzmechanismen nicht umgangen werden. Vielmehr wird deren Vorhandensein optimal genutzt, um ein Ein-zu-Viele-Bonding zu realisieren, das eine sichere und effiziente Verbindung mit mehreren Geräten ermöglicht. Die beschriebene Ausgestaltung erlaubt es somit, auf vorhandene Technologien zurückzugreifen und gleichzeitig deren Sicherheitsstandards einzuhalten, wodurch eine reibungslose Integration in industrielle Anwendungen und sicherheitskritische Umgebungen gewährleistet wird.

In einer weiteren Ausgestaltung ist die Steuereinheit dazu eingerichtet, bei einem initialen Verbindungsaufbau mit dem mobilen Gerät die Schlüsselinformation zu erzeugen, die erzeugte Schlüsselinformation zu verschlüsseln und die verschlüsselte Schlüsselinformation an das mobile Gerät zu übertragen.

Die Durchführung des initialen Verbindungsaufbaus als herkömmlicher Koppelvorgang bringt insbesondere Vorteile für die zukünftige Nutzung der generierten Schlüsselinformationen. Der initiale Verbindungsaufbau kann auf etablierten Kopplungsmechanismen basieren, bei denen das mobile Gerät und die Vorrichtung gemeinsam entsprechendes Schlüsselmaterial generieren. Im Rahmen von Bluetooth wird dieser Prozess als "Pairing" bezeichnet. Zusätzlich zum normalen Ablauf wird das Schlüsselmaterial der Vorrichtung vorzugsweise verschlüsselt an das mobile Gerät übertragen, wodurch eine Basis für zukünftige Interaktionen geschaffen wird. Der Vorteil dieser Vorgehensweise besteht darin, dass das mobile Gerät das empfangene Schlüsselmaterial für alle baugleichen Vorrichtungen verwenden kann. Dies bedeutet, dass nach dem initialen Koppelvorgang keine erneute manuelle Interaktion erforderlich ist, wenn das mobile Gerät in Zukunft mit weiteren baugleichen Vorrichtungen verbunden werden soll. Der Begriff "baugleich" bezieht sich hier auf die softwaretechnische Umsetzung, die es dem Gerät ermöglicht, Schlüsselmaterial zu empfangen und wie beschrieben zu verarbeiten. Diese Umsetzung muss bei den Vorrichtungen gegeben sein, damit die Vorrichtungen als baugleich gelten.

Es ist somit möglich, eine einfache Einrichtung der automatischen Kopplung bereitzustellen, indem auf die herkömmlichen Kopplungsmechanismen zurückgegriffen wird, die lediglich durch eine zusätzliche Schlüsselübergabe des generierten Schlüsselmaterials von der Vorrichtung an das mobile Gerät ergänzt werden. Auf diese Weise kann eine besonders leicht implementierbare automatische Kopplung realisiert werden, da im Wesentlichen auf bekannte Kopplungsmechanismen aufgebaut wird.

In einer weiteren Ausgestaltung weist die Vorrichtung einen ersten Ausgang zum Bereitstellen eines ersten Ausgangssignals auf, wenn die unverschlüsselte Funkverbindung in eine verschlüsselte Funkverbindung umgewandelt wird.

Diese Ausgestaltung ermöglicht der Vorrichtung, eine Reaktion in Abhängigkeit von der Art der Funkverbindung auszuführen. Mit anderen Worten: Die Vorrichtung kann eine Reaktion auslösen, sobald die Funkverbindung von unverschlüsselt auf verschlüsselt umgestellt wurde oder umgekehrt. In diesem Fall gibt die Vorrichtung ein entsprechendes Ausgangssignal an einem Ausgang aus, beispielsweise ein in industriellen Umgebungen übliches 24V-Signal. Alternativ kann das Ausgangssignal ein OSSD-Signal sein, wie es beispielsweise bei nicht-trennenden Schutzeinrichtungen eingesetzt wird. Unabhängig von der spezifischen Ausgestaltung des Ausgangssignals kann eine nachgelagerte Steuerungseinrichtung basierend auf diesem Signal entscheiden, ob ein bestimmter Betriebsmodus aktiviert wird oder nicht. Bei einer verschlüsselten Verbindung kann die Steuerungseinrichtung beispielsweise in einen Modus wechseln, der die Präsenz mobiler Geräte im Nahbereich überprüft und entsprechend darauf reagiert. Diese Ausgestaltung trägt daher dazu bei, die Nahbereichsüberwachung flexibel und effizient zu gestalten.

In einer weiteren Ausgestaltung weist die Vorrichtung einen zweiten Ausgang zum Bereitstellen eines zweiten Ausgangssignals auf, wenn die Steuereinheit das mobile Gerät mittels des auf der weiteren Funktechnologie basierenden Diensts in dem Nahbereich erkennt.

Die Vorrichtung kann folglich über einen weiteren Ausgang verfügen, an dem ein Ausgangssignal abhängig von der Erkennung eines mobilen Geräts im Nahbereich der Vorrichtung ausgegeben wird. Dadurch kann die Vorrichtung eine Reaktion auslösen, sobald ein mobiles Gerät im Nahbereich erkannt wird.

Vorteilhafterweise können der erste und der zweite Ausgang in Kombination genutzt werden, um eine effektive Steuerung auf Basis der Nahbereichserkennung zu ermöglichen. Einem Fachmann der Sicherheitstechnik sind entsprechende Anwendungsmöglichkeiten bekannt.

In einer weiteren Ausgestaltung ist die Steuereinheit dazu eingerichtet, über eine weitere unverschlüsselte Funkverbindung einen weiteren Datensatz mit einer weiteren Schlüsselinformation von mindestens einem weiteren mobilen Gerät zu empfangen und die weitere Schlüsselinformation in dem Speicherbereich für Datensätze über bereits durchgeführte Kopplungsvorgänge für die weitere Funkverbindung zu speichern, um die weitere unverschlüsselte Funkverbindung in eine verschlüsselte weitere Funkverbindung umzuwandeln. Insbesondere kann die Steuereinheit dazu eingerichtet sein, nach dem Umwandeln der weiteren Funkverbindung auf einen auf der weiteren Funktechnologie basierenden Dienst des weiteren mobilen Geräts zuzugreifen sowie mittels des auf der weiteren Funktechnologie basierenden Dienstes eine Erfassung des weiteren mobilen Geräts in dem Nahbereich der Vorrichtung durchzuführen.

Die Vorrichtung kann somit dazu ausgebildet sein, Funkverbindungen zu mehreren Geräten aufzubauen und eine Lokalisierung im Nahbereich durchzuführen. Dabei können die Verbindungen zu den einzelnen Geräten zumindest nacheinander, vorzugsweise aber auch gleichzeitig aufgebaut werden.

In einer weiteren Ausgestaltung sind der Datensatz mit der Schlüsselinformation und der weitere Datensatz mit der weiteren Schlüsselinformation jeweils verschlüsselte Datensätze, wobei die Steuereinheit dazu eingerichtet ist, den Datensatz und den weiteren Datensatz jeweils mit demselben in der Vorrichtung hinterlegten Schlüssel zu entschlüsseln.

Durch die Verwendung desselben Schlüssels in der Vorrichtung für die verschiedenen mobilen Geräte kann auf einfache Weise eine 1:n-Bindung realisiert werden, da nur ein Schlüssel in der Vorrichtung gespeichert werden muss.

In einer weiteren Ausgestaltung ist der Speicherbereich für Datensätze über bereits durchgeführte Kopplungsvorgänge für die Funkverbindung ein nichtflüchtiger Speicher.

Der Speicherbereich für Informationen über bereits durchgeführte Kopplungsvorgänge im Zusammenhang mit der Funkverbindung ist vorzugsweise ein Speicherbereich, der im Rahmen einer Bluetooth-Implementierung, dem sogenannten Bluetooth-Stack, bereitgestellt wird. Bluetooth-Stacks werden in der Regel von den Herstellern der jeweiligen Bluetooth-Hardware bereitgestellt. Beispiele hierfür sind SoftDevice von Nordic Semiconductor oder der BlueNRG-Stack von STMicroelectronics. Weitere Anbieter von Bluetooth-Stacks sind Texas Instruments, Silicon Labs und Qualcomm, die auch zur Entwicklung des quelloffenen Bluetooth-Stacks BlueZ beigetragen haben, welcher im offiziellen Linux-Kernel integriert ist. Ein Bluetooth-Stack ist eine Software, die den Bluetooth-Protokollstack implementiert und unter anderem die Speicherung bereits durchgeführter Kopplungsvorgänge für Verbindungen ermöglicht. Die Speicherung erfolgt in einem nichtflüchtigen Speicher, damit die Daten auch nach einem Neustart des Geräts erhalten bleiben.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.
Fig. 1 zeigt in einer schematischen Darstellung ein mögliches Anwendungsszenario für eine Vorrichtung zur Nahbereichserfassung.
Fig. 2 zeigt in einer schematischen Darstellung ein Ausführungsbeispiel der Vorrichtung.
Fig. 3 zeigt in einem Sequenzdiagramm eine Kommunikation zwischen der Vorrichtung und dem mobilen Gerät.
Fig. 4 zeigt in einer schematischen Darstellung einen möglichen Aufbau der Vorrichtung.

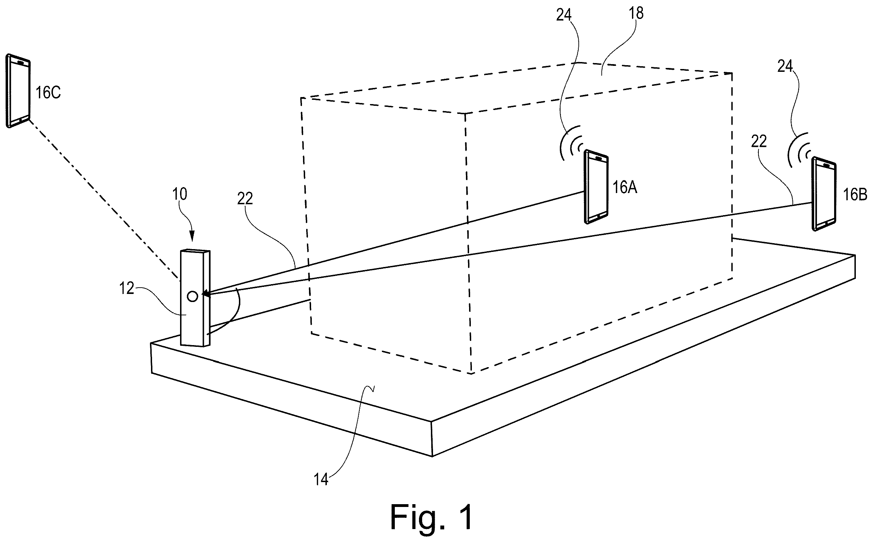

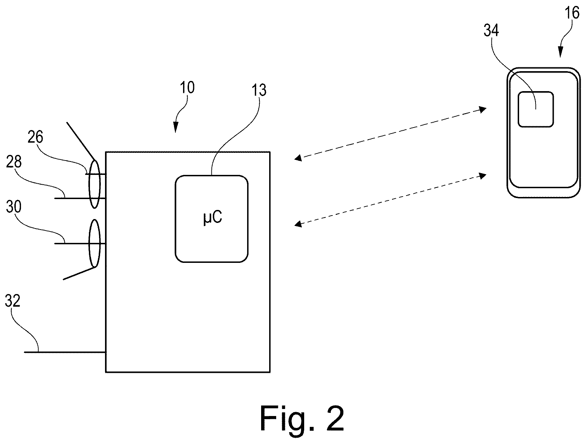

Fig. 1 zeigt in einer schematischen Darstellung ein mögliches Anwendungsszenario für eine Vorrichtung zur Nahbereichserfassung. Die Vorrichtung ist in diesem Ausführungsbeispiel mit der Bezugsziffer 10 bezeichnet. Die Vorrichtung ist hier in einem Gehäuse 12 angeordnet und auf einem Boden 14 aufgestellt, und dazu eingerichtet mobile Geräte 16A, 16B, 16C im Nahbereich der Vorrichtung 10 zu lokalisieren. Die Vorrichtung weist eine Steuereinheit 13 auf (siehe Fig. 2), die die Vorrichtung 10 steuert. Die Steuereinheit 13 kann ein dedizierter Mikrocontroller sein oder alternativ in Form eines für die Funkkommunikation verwendeten Controllers implementiert werden.

Die Vorrichtung 10 ist dazu eingerichtet, mobile Geräte 16A, 16B, 16C im Nahbereich zu lokalisieren und festzustellen, ob sich die Geräte in einem definierten Überwachungsbereich 18 befinden. Wenn die Vorrichtung 10 ein mobiles Gerät (hier das mobile Gerät 16A) in dem definierten Überwachungsbereich 18 erfasst, veranlasst die Vorrichtung 10 eine Reaktion auf die Erfassung. Beispielsweise kann die Vorrichtung 10 mit einer Steuereinrichtung einer technischen Anlage verbunden sein (hier nicht dargestellt) und an diese ein Signal senden, welches die Steuereinrichtung veranlasst, die technische Anlage in einen sicheren Zustand zu überführen. In einer anderen Ausführung kann die Steuereinrichtung den Betrieb einer technischen Anlage auch erst dann freigeben, wenn von der Vorrichtung 10 ein Signal übermittelt wird, das anzeigt, dass sich kein mobiles Gerät innerhalb des Überwachungsbereichs 18 befindet. Es versteht sich, dass diese beiden Ausführungsformen als beispielhaft zu verstehen sind und einem Maschinenkonstrukteur weitere Automatisierungsaufgaben bekannt sind, die auf der Detektion von mobilen Geräten in einem definierten Überwachungsbereich 18 basieren.

Die Erfassung der mobilen Geräte 16A, 16B, 16C kann mit verschiedenen Funktechnologien erfolgen. Beispiele für geeignete Funktechnologien sind eine Distanzmessung mittels Bluetooth Low Energy (BLE), eine Distanzmessung mittels Ultra-Wideband (UWB)-Technologie oder eine Distanzmessung kombiniert mit einer Winkelbestimmung basierend auf UWB und/oder BLE. Wie im Folgenden näher erläutert wird, kann insbesondere eine Kombination dieser Technologien eingesetzt werden, um eine effiziente und effektive Erfassung und Ortung zu realisieren.

In dem in Fig. 1 dargestellten Szenario wird zur Ortung eine Distanzmessung in Kombination mit einer Winkelbestimmung basierend auf UWB verwendet. Diese Technologie ermöglicht neben der Bestimmung der Entfernung zwischen der Vorrichtung 10 und den mobilen Vorrichtungen 16A, 16B, 16C auch die Bestimmung eines Winkels relativ zur Vorrichtung 10. Dadurch kann die Position der mobilen Vorrichtung genau bestimmt werden. Weiterhin können auf diese Weise nahezu beliebige Formen für den definierten Überwachungsbereich 18 definiert werden, die völlig unabhängig von anderen Objekten im Raum sind. Somit können je nach Anwendungsfall auch komplizierte Formen als Überwachungsbereich 18 realisiert werden. Eine Maschinensteuerung, die auf der Ortung mobiler Geräte 16A, 16B, 16C basiert, kann somit besonders flexibel gestaltet werden.

Wie nachfolgend noch näher erläutert wird, kann die Vorrichtung 10 dazu eingerichtet sein, zwischen drei verschiedenen Zuständen zu unterscheiden. Die Zustände können sich auf die Art der Funkverbindung zwischen der Vorrichtung und dem mobilen Gerät sowie auf die Lokalisierung im Überwachungsbereich 18 beziehen. Die drei Zustände sind in Fig. 1 beispielhaft anhand der mobilen Geräte 16 A bis C dargestellt.

Die Vorrichtung 10 kann kontinuierlich einen Vorgang zum Erkennen von Geräten in der Umgebung ausführen. Eine solche Entdeckungsphase wird im Englischen auch als Discovery bezeichnet. Im Rahmen einer solchen Entdeckungsphase hat die Vorrichtung 10, wie in Fig. 1 dargestellt, das mobile Gerät 16C entdeckt und eine unverschlüsselte Verbindung 20 zu diesem aufgebaut. Die unverschlüsselte Verbindung 20 (hier durch eine Strich-Punkt-Linie angedeutet) dient dem wechselseitigen Austausch von Identifikationsdaten, um entweder eine neue benutzergeführte Verbindung zwischen den beiden Geräten aufzubauen ("Paring") oder um auf eine bereits bestehende Kopplung zurückzugreifen ("Bonding"). Wie nachfolgend noch näher erläutert wird, kann über die unverschlüsselte Verbindung 20 auch ein Austausch von Schlüsselinformationen erfolgen, um einen automatisierten Aufbau einer gesicherten Verbindung zu realisieren. Solange nur die unverschlüsselte Verbindung 20 zwischen der Vorrichtung 10 und dem mobilen Gerät 16C besteht, kann die Vorrichtung 10 nicht auf Dienste zurückgreifen, die das mobile Gerät 16C anbietet, um eine genaue Lokalisierung des mobilen Geräts 16C durchzuführen. Folglich kann das mobile Gerät 16C auch nicht erkannt werden, wenn es in den Überwachungsbereich 18 eindringt. Hierzu wäre zunächst eine gesicherte Verbindung zwischen der Vorrichtung 10 und dem mobilen Gerät erforderlich.

Eine solche gesicherte Verbindung ist hingegen bereits zwischen der Vorrichtung 10 und dem mobilen Gerät 16B aufgebaut. Die gesicherte Verbindung entspricht einer verschlüsselten Verbindung 22 zwischen der Vorrichtung 16B und dem mobilen Gerät 16B und ist hier durch eine durchgezogene Linie dargestellt. Die verschlüsselte Verbindung 22 zwischen der Vorrichtung 10 und dem mobilen Gerät 16B ermöglicht es der Vorrichtung 10, auf einen von dem mobilen Gerät 16B bereitgestellten Dienst zuzugreifen, ohne dass hierfür eine weitere Benutzerinteraktion erforderlich ist. Bei dem Dienst kann es sich insbesondere um einen Lokalisierungsdienst 24 handeln, der es der Vorrichtung 10 ermöglicht, die Position des mobilen Geräts 16B im Raum zu bestimmen, indem beispielsweise ein Abstand und ein Winkel relativ zu der Vorrichtung 10 bestimmt werden.

Wie in Fig. 1 angedeutet, befindet sich das mobile Gerät 16B außerhalb des definierten Überwachungsbereichs 18. Daher hat die Vorrichtung 10 zwar das mobile Gerät 16B in ihrer Umgebung erkannt und eine sichere Verbindung zu diesem aufgebaut, jedoch hat die Vorrichtung 10 das mobile Gerät 16B innerhalb des definierten Überwachungsbereichs 18 nicht erkannt, sodass die Vorrichtung 10 die dafür vorgesehene Reaktion nicht auslöst.

Anders verhält es sich bei dem mobilen Gerät 16A. Zu diesem hat die Vorrichtung 10, wie zuvor zu dem mobilen Gerät 16B, eine verschlüsselte Verbindung 22 aufgebaut, sodass die Vorrichtung 10 auf den Lokalisierungsdienst 24 zugreifen kann. Ferner hat die Vorrichtung 10 anhand der Positionsdaten (Entfernung, Winkel, etc.) erkannt, dass sich das mobile Gerät 16A innerhalb des definierten Überwachungsbereichs befindet. Folglich kann die Vorrichtung 10 aufgrund der Erfassung ein Signal ausgeben, das anzeigt, dass sich das mobile Gerät 16A innerhalb des definierten Überwachungsbereichs 18 befindet. Das Signal kann an eine Steuerungseinrichtung (hier nicht dargestellt) weitergeleitet werden, die daraufhin eine bestimmte Reaktion ausführt.

Fig. 2 zeigt in einer schematischen Darstellung ein Ausführungsbeispiel der Vorrichtung, insbesondere mögliche Schnittstellen, die an der Vorrichtung 10 vorgesehen sein können.

Wie bereits im Zusammenhang mit Fig. 1 beschrieben, weist die Vorrichtung 10 zumindest eine Funkschnittstelle auf, über die sie eine Funkverbindung zu einem mobilen Gerät 16 aufbauen kann. Bei der Funkverbindung handelt es sich vorzugsweise um eine BLE-Verbindung, insbesondere um eine verschlüsselte Verbindung, die mithilfe des beanspruchten Verfahrens automatisiert und ohne Benutzerinteraktion herstellbar ist. Die verschlüsselte Funkverbindung dient dazu, dass das mobile Gerät 16 die Vorrichtung 10 als vertrauenswürdige Einrichtung betrachtet und der Vorrichtung 10 Dienste zur Verfügung stellt, die ein entsprechendes Vertrauensverhältnis voraussetzen. Ein solcher Dienst kann u. a. ein Lokalisierungsdienst sein, der es der Vorrichtung 10 ermöglicht, zumindest eine Entfernung zwischen der Vorrichtung 10 und dem mobilen Gerät 16 zu bestimmen. Der Lokalisierungsdienst kann insbesondere auf einer UWB-Funktechnologie basieren. In bevorzugten Ausführungsformen kann über den Lokalisierungsdienst neben dem Abstand auch ein Winkel oder ein anderer positionsbezogener Parameter bestimmt werden.

Wie ebenfalls bereits zu Fig. 1 beschrieben, kann die Vorrichtung 10 aus den von dem Lokalisierungsdienst erhaltenen Lokalisierungsdaten bestimmte Zustände ableiten und in Abhängigkeit davon Reaktionen auslösen. In verschiedenen Ausführungsformen weist die Vorrichtung 10 Ausgänge auf, an denen in Abhängigkeit vom aktuellen Zustand Ausgangssignale ausgegeben werden. Beispielsweise kann die Vorrichtung 10 einen ersten Ausgang aufweisen, an dem ein 24V Potential als erstes Ausgangssignal geschaltet wird, wenn die Vorrichtung 10 eine verschlüsselte Verbindung zu dem mobilen Gerät 16 aufgebaut hat. Insbesondere kann die Vorrichtung 10 das erste Ausgangssignal bereitstellen, wenn eine unverschlüsselte Funkverbindung zu dem Mobilgerät 16 automatisiert in eine verschlüsselte Funkverbindung umgewandelt wurde. Mit dem ersten Ausgangssignal kann einer nachgeordneten Steuerungseinrichtung signalisiert werden, dass sich ein mobiles Gerät 16 in der Nähe befindet, welches über einen Lokalisierungsdienst des mobilen Geräts genau lokalisiert werden kann.

Die Vorrichtung 10 kann ferner einen zweiten Ausgang 28 aufweisen, auf den ein 24V Potential als zweites Ausgangssignal geschaltet wird, wenn die Vorrichtung 10 das mobile Gerät 16 innerhalb eines definierten Überwachungsbereichs detektiert. Wie zuvor in Bezug auf Fig. 1 beschrieben, kann der definierte Überwachungsbereich ein virtueller Bereich sein, der durch relative Positionsangaben in Bezug auf die Vorrichtung 10 definiert ist. Auf Basis des zweiten Ausgangssignals kann eine nachgeschaltete Steuereinrichtung eine Reaktion einleiten, beispielsweise indem die Steuereinrichtung eine technische Anlage in einen sicheren Zustand versetzt, in dem keine Gefahr für eine Person, die das mobile Gerät 16 bei sich trägt, ausgehen kann.

Neben dem ersten Ausgang 26 und dem zweiten Ausgang 28 kann die Vorrichtung 10 eine Datenschnittstelle 30 aufweisen, über die weitergehende Daten mit einer Steuereinrichtung ausgetauscht werden können. Im Gegensatz zu dem ersten Ausgangssignal und dem zweiten Ausgangssignal, die vorzugsweise als Schaltpotentiale ausgebildet sind, kann an der Datenschnittstelle 30 ein Datensignal bereitgestellt werden, das nähere Informationen über die aktuellen Zustände der Vorrichtung 10, insbesondere die Funkverbindungen und die erfassten Ortungsinformationen, enthält. Ebenso können über die Datenschnittstelle 30 Daten von einem anderen Gerät empfangen werden. Bei der Datenschnittstelle 30 kann es sich beispielsweise um eine RS485-Schnittstelle handeln, über die eine im industriellen Umfeld standardisierte Datenkommunikation möglich ist. Es versteht sich, dass die Herstellung der zuvor beschriebenen gesicherten Verbindung nicht auf die Datenschnittstelle 30 angewiesen ist. So kann die gesicherte Verbindung gerade ohne eine Datenverbindung zu einem anderen Gerät als das mobile Gerät hergestellt werden.

Schließlich kann die Vorrichtung 10 einen Versorgungsanschluss 32 aufweisen, über den die für den Betrieb erforderliche Energie aufgenommen wird. Bei dem Versorgungsanschluss 32 kann es sich um einen üblichen Stromanschluss handeln, an den beispielsweise eine im industriellen Umfeld übliche Betriebsspannung von 24V anlegbar ist.

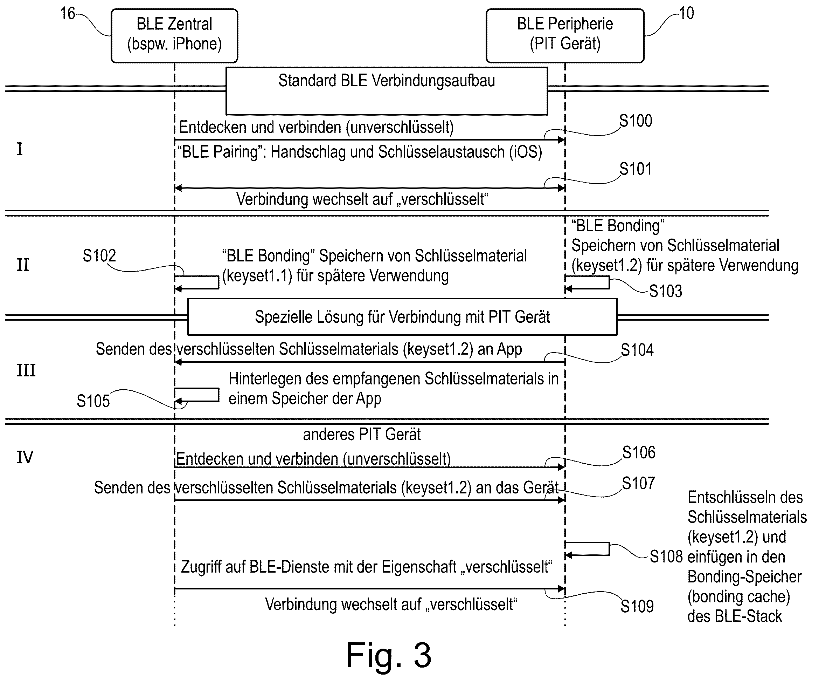

Für den nachfolgend mit Bezug auf Fig. 3 beschriebenen automatisierten Verbindungsaufbau zwischen der Vorrichtung 10 und dem mobilen Gerät 16 kann eine Applikation (App) auf dem mobilen Gerät 16 erforderlich sein. Eine solche Applikation ist hier in Fig. 2 zwei mit dem Bezugszeichen 34 angedeutet. Die Applikation 34 kann beispielsweise dazu eingerichtet sein, Schlüsselinformationen auf dem mobilen Gerät 16 zu speichern und bei einem Verbindungsaufbau an die Vorrichtung 10 zu übertragen.

Fig. 3 zeigt in einem Sequenzdiagramm eine Kommunikation zwischen der Vorrichtung und dem mobilen Gerät.

In dem Sequenzdiagramm werden verschiedene Vorgänge dargestellt, die hier mit den römischen Ziffern I-IV gekennzeichnet sind. Bei den einzelnen Vorgängen handelt es sich um abgeschlossene Vorgänge, die allein oder in Kombination mit den anderen Vorgängen ausgeführt werden können. Die Vorgänge I und II sind Standardvorgänge bei WPAN (Wireless Personal Area Network)-Netzwerken wie beispielsweise Bluetooth. Vorgang I beschreibt einen sogenannten "Pairing"-Vorgang, d. h. einen initialen Verbindungsaufbau zwischen dem mobilen Gerät 16 und der Vorrichtung 10. Vorgang II beschreibt einen sogenannten "Bonding"-Vorgang, bei dem nach einem initialen Verbindungsaufbau das mobile Gerät 16 und die Vorrichtung 10 so konfiguriert werden, dass sie ohne erneutes "Pairing" wieder eine Verbindung aufbauen können.

Der Pairing-Vorgang (Vorgang I) beginnt üblicherweise mit einer Discovery-Phase, in der das mobile Gerät 16 (oder die Vorrichtung) aktiv nach anderen Geräten in der Nähe sucht und deren Präsenz erkennt. Sobald das gewünschte Gerät gefunden wurde, beginnt eine Connect-Phase, in der eine unverschlüsselte Verbindung aufgebaut wird, um eine Basiskommunikation zu ermöglichen (S100). Danach folgt der Handshake, in dem beide Geräte ihre Identität bestätigen und die Basis für den weiteren Austausch legen. Dies erfordert in der Regel eine Benutzerinteraktion, um Missbrauch zu verhindern und sicherzustellen, dass die Verbindung nur zwischen den gewünschten Geräten aufgebaut wird. Schließlich erfolgt der Austausch von Schlüsseln, um Vertrauen aufzubauen und die Verbindung zu verschlüsseln, damit zukünftige Daten sicher übertragen werden können (S101).

Der Bonding-Vorgang (Vorgang II) dient der langfristigen Etablierung einer vertrauensvollen Verbindung zwischen zwei Geräten. Er beginnt ähnlich wie das Pairing mit dem Erkennen und Verbinden der Geräte. Beim Bonding werden jedoch zusätzlich verschlüsselte Authentifizierungsprozesse durchlaufen, bei denen die Geräte Schlüssel austauschen und speichern. Dies kann durch einen sicheren Schlüsselaustausch erfolgen, bei dem beide Geräte einen eindeutigen, geheimen Schlüssel erzeugen, der für zukünftige Verbindungen verwendet wird. Der Bonding-Vorgang speichert diese Schlüssel dann dauerhaft (S102, S103), sodass die Geräte bei zukünftigen Verbindungen automatisch authentifiziert werden und eine verschlüsselte Kommunikation ohne erneutes Pairing, insbesondere ohne weitere Benutzerinteraktion, ermöglichen. Dies ermöglicht eine komfortablere und sicherere Nutzung, da die Geräte bei erneutem Kontakt verbunden werden, ohne dass der Benutzer erneut eingreifen muss.

Das Bonding wird in den gängigen Implementierungen für jeden Kommunikationspartner individuell durchgeführt. Mit anderen Worten ist das Bonding üblicherweise auf eine 1:1-Beziehung beschränkt. Um nun die Möglichkeit eines Eins-zu-Viele-Bondings (1:n-Bonding) einzurichten, sind das mobile Gerät 16 und die Vorrichtung 10 dazu eingerichtet, die Vorgänge III und IV durchzuführen. Vorgang III beschreibt die Einrichtung des 1:n-Bondings und Vorgang IV beschreibt einen automatisierten Verbindungsaufbau eines mobilen Geräts, das zuvor Vorgang III durchlaufen hat.

In Vorgang III sendet die Vorrichtung 10 Schlüsselmaterial an das mobile Gerät 16. Bei dem Schlüsselmaterial kann es sich insbesondere um einen geheimen Schlüssel handeln, den die Vorrichtung 10 im Rahmen eines Bonding-Vorgangs (Vorgang II) erzeugt hat. Mit anderen Worten kann die Vorrichtung 10 dazu eingerichtet sein, einen für die Vorrichtung 10 bestimmten geheimen Schlüssel an das mobile Gerät 16 zu übertragen (S104). Hat die Vorrichtung 10 beispielsweise während des Bondings einen öffentlichen Schlüssel und einen geheimen Schlüssel erzeugt und den öffentlichen Schlüssel an das mobile Gerät 16 übertragen, so kann die Vorrichtung 10 zusätzlich den geheimen Schlüssel als besagtes Schlüsselmaterial an das mobile Gerät 16 übertragen. Diese Übertragung ist jedoch nicht Bestandteil des jeweiligen Kommunikationsprotokolls, sondern erfolgt außerhalb desselben, beispielsweise durch eine auf dem mobilen Gerät 16 installierte Applikation, die das Schlüsselmaterial empfängt und speichert (S105).

Ferner kann die Vorrichtung 10 das Schlüsselmaterial vorzugsweise verschlüsseln, sodass das Schlüsselmaterial auch über eine ungesicherte Verbindung sicher übertragen und in dem mobilen Gerät 16 gespeichert werden kann. Der hierfür verwendete Schlüssel kann in der Vorrichtung 10 sowie in weiteren baugleichen Vorrichtungen 10 abgelegt werden. Mit dem so hinterlegten Schlüsselmaterial kann das mobile Gerät 16 dann automatisiert eine gesicherte Verbindung zu der Vorrichtung 10 oder weiteren baugleichen Vorrichtungen 10 aufbauen. Wie nachfolgend noch näher erläutert wird, funktioniert dieser Verbindungsaufbau somit auch dann, wenn das mobile Gerät 16 mit einer anderen Vorrichtung 10 verwendet wird als mit derjenigen, mit der es die initiale Bindung durchgeführt hat.

Schließlich zeigt Vorgang IV den automatisierten Aufbau einer gesicherten Verbindung zu einer beliebigen Vorrichtung 10. Mit anderen Worten kann das mobile Gerät 16 beim Vorgang IV eine gesicherte Verbindung zu einer Vorrichtung 10 aufbauen, die nicht die Vorrichtung 10 ist, mit der das mobile Gerät 16 das ursprüngliche Bonding durchgeführt hat. Zunächst werden für den automatisierten Verbindungsaufbau die aus dem Pairing-Vorgang bekannten initialen Verbindungsphasen Discovery und Connect durchgeführt (S106). Sobald eine unverschlüsselte Verbindung zwischen dem mobilen Gerät 16 und der Vorrichtung 10 eingerichtet ist, sendet das mobile Gerät 16 in einem zweiten Schritt das zuvor abgelegte Schlüsselmaterial an die Vorrichtung 10 (S107).

Die Vorrichtung 10 empfängt das Schlüsselmaterial und führt eine Entschlüsselung durch, wenn das Schlüsselmaterial verschlüsselt ist. Zur Entschlüsselung kann ein zuvor in der Vorrichtung 10 hinterlegter Schlüssel verwendet werden. Dieser wird vorzugsweise in allen baugleichen Vorrichtungen 10 hinterlegt. Anschließend hinterlegt die Vorrichtung 10 das Schlüsselmaterial in einem Speicherbereich für Datensätze über bereits durchgeführte Kopplungsvorgänge, der auch als Bonding-Cache bezeichnet wird (S108). Die Ausgestaltung des Bonding-Cache hängt von der softwareseitigen Implementierung der Funkschnittstelle ab. Üblicherweise kann auf den Bonding-Cache über eine API der jeweiligen Implementierung zugegriffen werden.

Sobald das Schlüsselmaterial in dem Bonding-Cache hinterlegt ist, können die Vorrichtung 10 und das mobile Gerät 16 eine verschlüsselte Verbindung aufbauen bzw. eine bestehende unverschlüsselte Verbindung in eine verschlüsselte Verbindung umwandeln. Dieser Vorgang verläuft wie bei einem normalen Bonding. Sobald entsprechendes Schlüsselmaterial im Bonding-Cache vorliegt, können die Vorrichtung 10 und das mobile Gerät 16 automatisch in den gesicherten Betrieb wechseln und dabei auf die standardmäßig vorgesehenen Vorgänge zurückgreifen.

Nach dem Wechsel hin zu einer gesicherten Verbindung zwischen der Vorrichtung 10 und dem mobilen Gerät 16 gibt das mobile Gerät 16 einen Zugriff der Vorrichtung 10 auf Dienste des mobilen Geräts 16 frei. Insbesondere erlaubt das mobile Gerät 10 die Verwendung eines Lokalisierungsdienstes, mit dessen Hilfe die Vorrichtung 10 das mobile Gerät 16 im Nahbereich der Vorrichtung auffinden kann.

Die Möglichkeit dieses automatisierten Verbindungsaufbaus steht allen mobilen Geräten 16 zur Verfügung, die das Schlüsselmaterial hinterlegt haben. Mit dem Schlüsselmaterial können die mobilen Geräte 16 automatisiert eine gesicherte Verbindung zu jeder Vorrichtung 10 aufbauen, die in der Lage ist, das Schlüsselmaterial zu empfangen und ggf. zu entschlüsseln. Somit lassen sich auf effektive Weise und ohne zusätzliche Nutzerinteraktion gesicherte Verbindungen zwischen einem mobilen Gerät und verschiedenen Vorrichtung 10 aufbauen (1:n-Bonding).

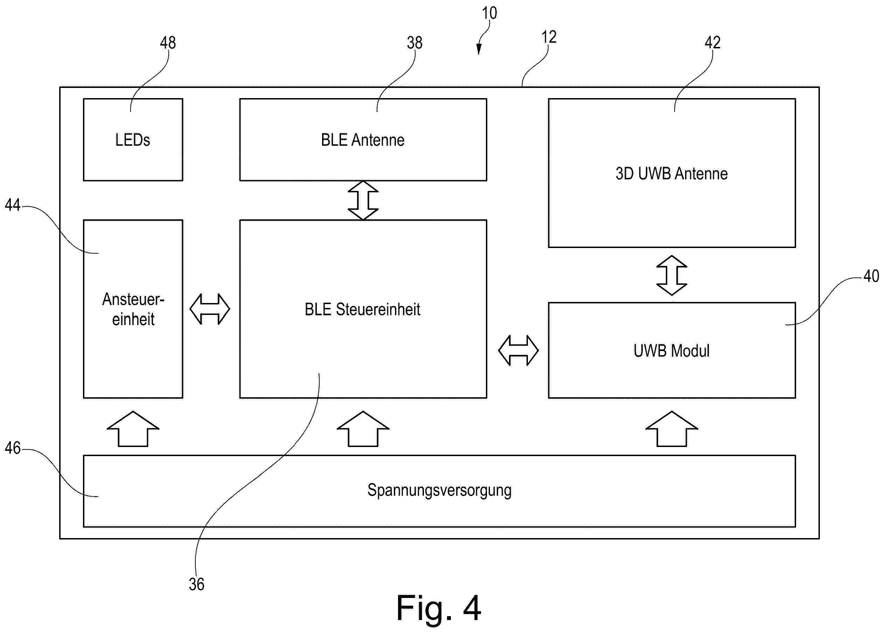

Fig. 4 zeigt abschließend in einer schematischen Darstellung den möglichen Aufbau einer Vorrichtung 10. Die Vorrichtung 10 ist in diesem Ausführungsbeispiel so konzipiert, dass sie verschiedene technologische Komponenten kombiniert, um eine präzise Lokalisierung und Kommunikation zu ermöglichen. Zentral ist die BLE Steuereinheit 36, die auch als BLE Host Controller bezeichnet wird. Diese ist für die Steuerung der Bluetooth Low Energy (BLE)-Kommunikation zuständig und dazu eingerichtet, eine stabile und energieeffiziente Verbindung zu mobilen Geräten herzustellen. Die zugehörige BLE Antenne 38 unterstützt den Host Controller, indem sie BLE-Signale sendet und empfängt und so die Grundlage für die Nahbereichskommunikation bildet.

Ergänzend zur BLE-Kommunikation verfügt die Vorrichtung über ein UWB-Modul 40, welches zur Ultra-Wideband-Technologie gehört und für eine präzise Entfernungsmessung und Winkelbestimmung genutzt wird. Das UWB-Modul 40 wird von einer 3D UWB Antenne 42 unterstützt, die UWB-Signale in verschiedenen Raumrichtungen empfangen und senden kann und so die 3D-Positionsbestimmung ermöglicht.

Eine Ansteuereinheit 44 realisiert die Verbindung nach außen und kann die Ausgänge und Datenschnittstellen der Vorrichtung 10 umfassen. Für eine zuverlässige Stromversorgung sorgt eine Spannungsversorgung 46, welche mit einer externen Stromversorgung verbunden ist und die verschiedenen Module und Antennen mit der erforderlichen Energie versorgt und einen stabilen Betrieb gewährleistet.

Abschließend sind Anzeigeelemente (LEDs) 48 in der Vorrichtung 10 integriert, die zur visuellen Rückmeldung dienen. Diese LEDs zeigen Statusinformationen an und geben dem Benutzer Hinweise über den Betriebszustand der Vorrichtung, beispielsweise ob eine Verbindung besteht oder ob die Vorrichtung im Erfassungsmodus arbeitet.

Es versteht sich, dass die vorstehenden Ausführungsbeispiele nur exemplarisch sind und weitere Varianten einzelner Komponenten möglich sind, um Ausgestaltungen der nachfolgenden Ansprüche zu realisieren. Der Schutzumfang der vorliegenden Erfindung wird durch die nachfolgenden Patentansprüche bestimmt und ist nicht durch die in der Beschreibung erläuterten oder in den Figuren dargestellten Merkmale begrenzt.

### Bezugszeichenliste

- 10: Vorrichtung
- 12: Gehäuse
- 14: Boden
- 16: mobiles Gerät (16A; 16B; 16C)
- 18: definierte Überwachungsbereich
- 20: unverschlüsselte Verbindung
- 22: verschlüsselte Verbindung
- 24: Lokalisierungsdienst
- 26: erster Ausgang
- 28: zweiter Ausgang
- 30: Datenschnittstelle
- 32: Versorgungsanschluss
- 34: Applikation
- 36: BLE Host Controller
- 38: BLE-Antenne
- 40: UWB-Modul
- 42: 3D-UWB-Antenne
- 44: Ansteuereinheit
- 46: Spannungsversorgung
- 48: Anzeigeelemente (LEDs)

## Patentansprüche

1. Vorrichtung (10) zur Erfassung eines mobilen Geräts (16) in einem Nahbereich der Vorrichtung,
wobei die Vorrichtung eine Steuereinheit (13) aufweist, die dazu eingerichtet ist,
von dem mobilen Gerät über eine unverschlüsselte Funkverbindung einen Datensatz mit einer Schlüsselinformation zu empfangen,
die Schlüsselinformation in einem Speicherbereich für Datensätze über bereits durchgeführte Koppelvorgänge für die Funkverbindung zu speichern, um die unverschlüsselte Funkverbindung (20) in eine verschlüsselte Funkverbindung (22) zu wandeln,
nach der Umwandlung der Funkverbindung auf einen auf einer weiteren Funktechnologie basierenden Dienst des mobilen Geräts zuzugreifen, sowie
mittels des auf der weiteren Funktechnologie basierenden Dienstes eine Erfassung des mobilen Geräts (16) in dem Nahbereich der Vorrichtung durchzuführen.

2. Vorrichtung nach Anspruch 1, wobei der Datensatz mit der Schlüsselinformation verschlüsselt ist.

3. Vorrichtung nach Anspruch 2, wobei die Steuereinheit (13) dazu eingerichtet ist, den Datensatz mit einem in der Vorrichtung hinterlegten Schlüssel zu entschlüsseln.

4. Vorrichtung nach einem der Ansprüche 1 bis 3, wobei die Funkverbindung eine Bluetooth-Verbindung ist, insbesondere eine Bluetooth-Low-Energy-(BLE)-Verbindung.

5. Vorrichtung nach einem der Ansprüche 1 bis 4, wobei die weitere Funktechnologie eine Ultra-Breitband-(UWB)-Technologie ist, insbesondere eine UWB-basierte Abstands- und/oder Positionsbestimmung.

6. Vorrichtung nach einem der Ansprüche 1 bis 5, wobei ein Zugriff auf den auf der weiteren Funktechnologie basierenden Dienst nur möglich ist, wenn die Vorrichtung (10) und das mobile Gerät (16) über die verschlüsselte Funkverbindung (22) verbunden sind.

7. Vorrichtung nach einem der Ansprüche 1 bis 6, wobei die Steuereinheit (13) dazu eingerichtet ist, bei einem initialen Verbindungsaufbau mit dem mobilen Gerät (16) die Schlüsselinformation zu erzeugen, die erzeugte Schlüsselinformation zu verschlüsseln und die verschlüsselte Schlüsselinformation an das mobile Gerät (16) zu übertragen.

8. Vorrichtung nach einem der Ansprüche 1 bis 7, wobei die Vorrichtung einen ersten Ausgang (26) zum Bereitstellen eines ersten Ausgangssignals aufweist, wenn die unverschlüsselte Funkverbindung (20) in eine verschlüsselte Funkverbindung umgewandelt (22) wird.

9. Vorrichtung nach einem der Ansprüche 1 bis 8, wobei die Vorrichtung einen zweiten Ausgang (28) zum Bereitstellen eines zweiten Ausgangssignals aufweist, wenn die Vorrichtung das mobile Gerät (16) mittels des auf der weiteren Funktechnologie basierenden Dienstes in dem Nahbereich erfasst.

10. Vorrichtung nach einem der Ansprüche 1 bis 9, wobei die Steuereinheit (13) dazu eingerichtet ist, über eine weitere unverschlüsselte Funkverbindung einen weiteren Datensatz mit einer weiteren Schlüsselinformation von mindestens einem weiteren mobilen Gerät zu empfangen und die weitere Schlüsselinformation in dem Speicherbereich für Datensätze über bereits durchgeführte Kopplungsvorgänge für die weitere Funkverbindung zu speichern, um die weitere unverschlüsselte Funkverbindung in eine verschlüsselte weitere Funkverbindung umzuwandeln.

11. Vorrichtung nach Anspruch 10, wobei die Steuereinheit (13) dazu eingerichtet ist, nach dem Umwandeln der weiteren Funkverbindung auf einen auf der weiteren Funktechnologie basierenden Dienst des weiteren mobilen Geräts zuzugreifen sowie mittels des auf der weiteren Funktechnologie basierenden Dienstes eine Erfassung des weiteren mobilen Geräts in dem Nahbereich der Vorrichtung durchzuführen.

12. Vorrichtung nach einem der Ansprüche 10 oder 11, wobei der Datensatz mit der Schlüsselinformation und der weitere Datensatz mit der weiteren Schlüsselinformation jeweils verschlüsselte Datensätze sind, und wobei die Steuereinheit (13) dazu eingerichtet ist, den Datensatz und den weiteren Datensatz jeweils mit demselben in der Vorrichtung hinterlegten Schlüssel zu entschlüsseln.

13. Vorrichtung nach einem der Ansprüche 1 bis 12, wobei der Speicherbereich für Datensätze über bereits durchgeführte Kopplungsvorgänge für die Funkverbindung ein nichtflüchtiger Speicher ist.

14. Verfahren zur Erfassung eines mobilen Geräts (16) in einem Nahbereich einer Vorrichtung (10), aufweisend:
- Empfang eines Datensatzes mit einer Schlüsselinformation von dem mobilen Gerät (16) über eine unverschlüsselte Funkverbindung (20);
- Speichern von Schlüsselinformationen in einem Speicherbereich für Datensätze über bereits durchgeführte Kopplungsvorgänge für die Funkverbindung;
- Umwandeln der unverschlüsselten Funkverbindung (20) in eine verschlüsselte Funkverbindung (22) mithilfe der im Speicherbereich abgelegten Schlüsselinformation;
- Zugreifen auf einen Dienst des mobilen Geräts (16), der auf einer anderen Funktechnologie basiert, nach Umwandlung der Funkverbindung; sowie
- Erfassen des mobilen Geräts (16) in dem Nahbereich der Vorrichtung mithilfe des auf einer anderen Funktechnologie basierenden Dienstes.
